Europäisches Patentamt

European Patent Office

Office européen des brevets

(11) Veröffentlichungsnummer : **0 058 739**
**B1**

(12) **EUROPÄISCHE PATENTSCHRIFT**

(45) Veröffentlichungstag der Patentschrift :
20.02.85

(51) Int. Cl.⁴ : **H 02 G   3/06**

(21) Anmeldenummer : 81103489.1

(22) Anmeldetag : 07.05.81

(54) **Kabeldurchführung mit Zugentlastung.**

(30) Priorität : 13.02.81 DE 3105316
29.04.81 DE 3117029

(43) Veröffentlichungstag der Anmeldung :
01.09.82 Patentblatt 82/35

(45) Bekanntmachung des Hinweises auf die Patenterteilung : 20.02.85 Patentblatt 85/08

(84) Benannte Vertragsstaaten :
FR GB IT NL SE

(56) Entgegenhaltungen :
DE-A- 1 590 178
FR-A- 1 482 561
FR-A- 2 408 931

(73) Patentinhaber : Simon, Hans
Bruchhausener Strasse
D-5463 Unkel/Rhein (DE)

(72) Erfinder : Simon, Hans
Bruchhausener Strasse
D-5463 Unkel/Rhein (DE)

(74) Vertreter : Reinhard, Skuhra, Weise
Leopoldstrasse 51
D-8000 München 40 (DE)

**Beschreibung**

Die Erfindung betrifft eine Kabeldurchführung mit Zugentlastung gemäß dem Oberbegriff des Anspruchs 1.

Der Zweck einer solchen Kabeleinführung besteht darin, das Kabel gegen Kanten der Durchführungsöffnung geschützt in ein Gehäuse einzuführen und gleichzeitig gegen Zug und Verdrehung zu sichern, so daß die elektrischen Anschlußleitungen entsprechend entlastet sind. Ferner werden gefordert ein großer Klemmbereich, einfache Handhabung und preiswerte Herstellung.

Bei einer bekannten Kabeldurchführung (FR-A-2 408 931) ist das Klemmglied mitsamt dem Klemmorgan in einer innen unrunden Durchführungshülse drehbar. In der Öffnungsstellung weist das Klemmorgan einen größeren Innendurchmesser auf, so daß das Kabel hindurchgesteckt werden kann. Sodann wird das Klemmglied in der unrunden Durchstecköffnung der Hülse verdreht, wobei es radial nach innen auf einen kleineren Innendurchmesser verformt wird und damit das Kabel festspannt. Die Hülse selbst ist in eine Gehäuseöffnung eingesteckt und dort gegenüber dem Gehäuse festgelegt.

Bei Kabeldurchführungen dieser Art besteht die Gefahr, daß die Kabel abgeknickt werden oder in axialer Richtung oder quer zur Achse des Kabels zangenartig eingeklemmt werden. Auch ist der Klemmbereich der bekannten Kabeldurchführungen gering, d. h. die Kabeldurchführung ist nur auf einen geringen Durchmesserbereich abgestellt, bei zu dicken Kabeln kommt es leicht zu den erwähnten Einkerbungen, zu dünne Kabel können überhaupt nicht ausreichend festgespannt und damit zugentlastet werden.

Demgegenüber liegt der Erfindung die Aufgabe zugrunde, eine Kabeldurchführung der genannten Art zu schaffen, welche eine besonders großflächig spannende, hochwirksame Zugentlastung aufweist, und zwar bei einem relativ sehr großen Klemmbereich von bis über 50 % des Maximaldurchmessers ; dabei soll die Kabeldurchführung leicht herstellbar, insbesondere bei Herstellung aus Kunststoff im Spritzgußverfahren leicht entformbar sein.

Die Lösung dieser Aufgabe ist in dem Kennzeichnenden Teil des Anspruchs 1 angegeben und wird durch die Unteransprüche weiter ausgestaltet.

Zur näheren Erläuterung der Erfindung werden nachfolgend Ausführungsbeispiele anhand der Zeichnung beschrieben, wobei auch die Merkmale der Unteransprüche erläutert werden.

Es zeigen :

Figuren 1 bis 9   ein erstes Ausführungsbeispiel einer erfindungsgemäßen Kabeldurchführung, und zwar

Figur 1   das Klemmglied in Seitenansicht ;

Figur 2   das Klemmglied in einer gegenüber der Fig. 1 um 90° verdrehten Seitenansicht (Pfeil II in Fig. 1) ;

Figur 3   das Klemmglied in axialer Draufsicht von unten (Pfeil III in Fig. 1) ;

Figur 4   die Hülse in axialer Draufsicht von oben bzw. von außen (Pfeil IV in Fig. 5) ;

Figur 5   die Hülse in Seitenansicht ;

Figur 6   die Hülse perspektivisch von hinten rechts ;

Figur 7   Klemmglied und Hülse zusammengesteckt von der Seite ;

Figur 8   die komplette Kabeldurchführung von der Seite ;

Figur 9   eine Draufsicht auf die Kabeldurchführung nach Fig. 8 von oben (Pfeil IX in Fig. 8).

Figuren 10 bis 15   zeigen ein Ausführungsbeispiel der Erfindung mit zwei Klemmbändern, und zwar ist

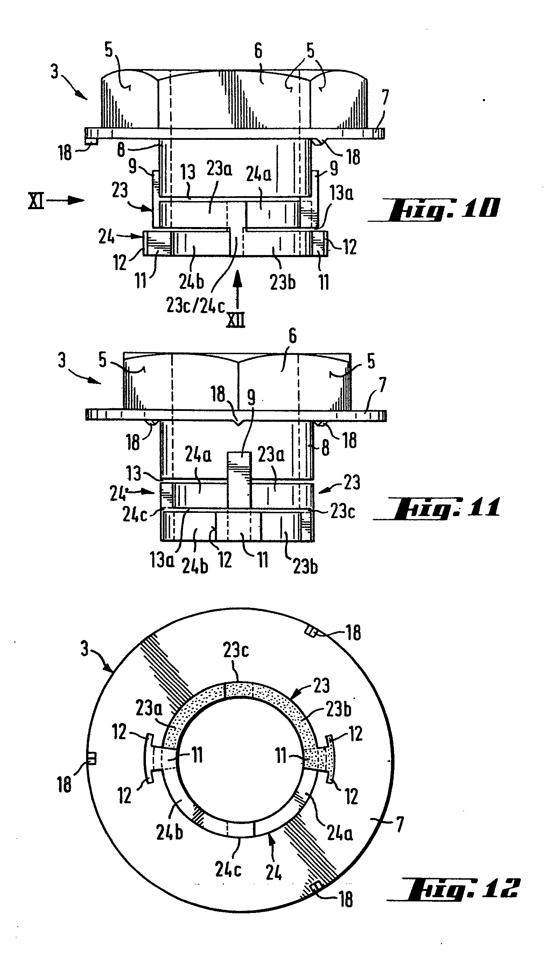

Figur 10   eine Seitenansicht auf das Klemmglied,

Figur 11   eine Seitenansicht nach Pfeil XI in Fig. 10, also um 90° verdreht ;

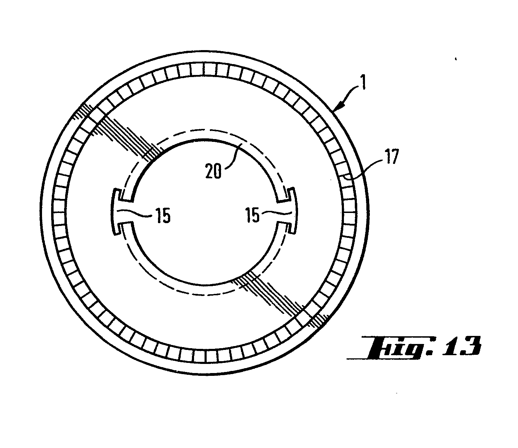

Figur 12   zeigt eine Druntersicht in Richtung XII unter Fig. 10 ;

Figur 13   eine Draufsicht auf die zugehörige Durchführungshülse ;

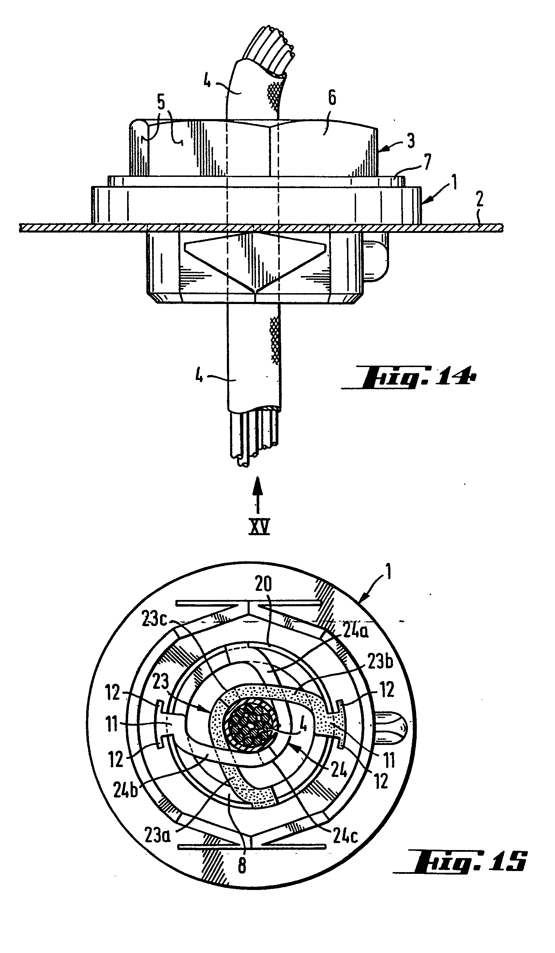

Figur 14   eine Draufsicht auf die gesamte Kabeldurchführung dieser Art von der Seite ;

Figur 15   ist eine Druntersicht in Richtung XV von Fig. 14.

Die dargestellte Kabeldurchführung weist eine Durchführungshülse 1 auf, welche in ein Loch einer Gehäusewand 2 eingesetzt und dabei am Rand des Gehäusedurchbruchs verankert werden kann.

In die Hülse 1 ist von der Außenseite her ein Klemmglied 3 einsteckbar, durch welches hindurch das Kabel 4 (Fig. 8, 9) in der Öffnungsstellung hindurchgesteckt werden kann, welches aber in der gegenüber der Öffnungsstellung verdrehten Verschlußstellung das Kabel 4 umspannt und somit festlegt.

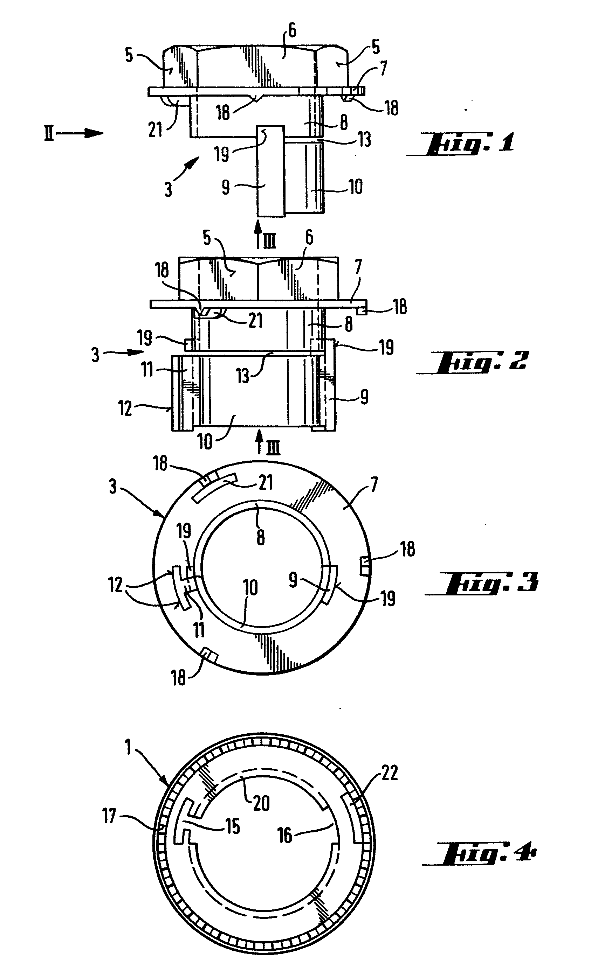

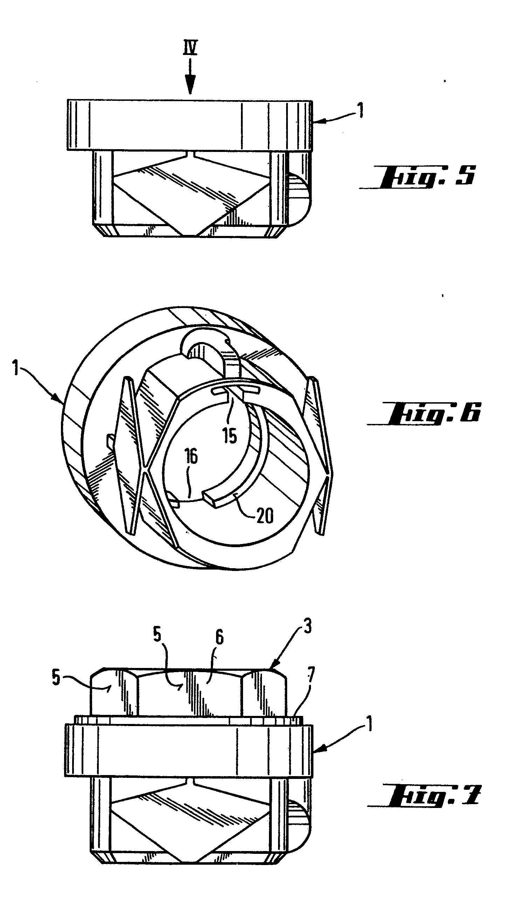

Gemäß Fig. 1 bis 3 weist das Klemmglied 3 einen mit Schlüsselangriffsflächen 5 versehenen Kopf 6 auf, der mit einem im Durchmesser verbreiterten Bund 7 gegen die Stirnfläche der Hülse 1 anliegt. Unterhalb des Bundes 7 ist ein ringförmiger Hals 8 vorgesehen, der in die Bohrung der Hülse 1 eingreift. An der einen Seite des Halses 8 ist ein sich axial erstreckender Steg 9 einstückig angeformt, an dem wiederum ein sich in Umfangsrichtung, also quer zur Längsachse erstreckendes Klemmband 10 anschließt. In Draufsicht (Fig 3) erstreckt sich das Klemmband 10 über fast einen Halbkreis, es hat den gleichen Durchmesser wie der Hals 8. Am freien, also vom Verbindungssteg 9 abgewandten Ende des Klemmbandes 10 ist ein im wesentlichen T-förmiges Einschubprofil 11 (seitliche Flügel 12) vorgesehen. Das Klemmband 10 ist mitsamt dem Einschubprofil 11 um den Befestigungssteg 9 herum in die vom Hals 8 umschriebene Kreisfläche hinein verschwenkbar, worauf die Klemmwirkung beruht.

Die Hülse 1 weist in ihrer Wandung eine dem

Einschubprofil 11 entsprechende Einschubnut 15 auf. Beim axialen Zusammenstecken von Hülse 1 und Klemmglied 3 wird also das Einschubprofil 11 in der Einschubnut 15 verankert, das freie Ende des Klemmbandes 10 ist also gegenüber der Hülse 1 unverdrehbar festgehalten. Der Kopf 6 des Klemmgliedes 3 dagegen ist — mittels der Schlüsselangriffsflächen 5 — gegenüber der Hülse 1 verdrehbar ; bei dieser Verdrehung gelangt also das Klemmband 2 aus der in Fig. 3 gezeigten Lage hinaus und erstreckt sich mehr oder weniger weit über die vom Hals 8 gebildete Kreisfläche — das eingesetzte Kabel (oder aber auch ein Schlauch) — wird also zwischen dem Klemmband 10 und der gegenüberliegenden Wandung festgeklemmt. (Mit 13 ist der Abstand oder Spalt zwischen Hals 8 und Klemmband 10 bezeichnet).

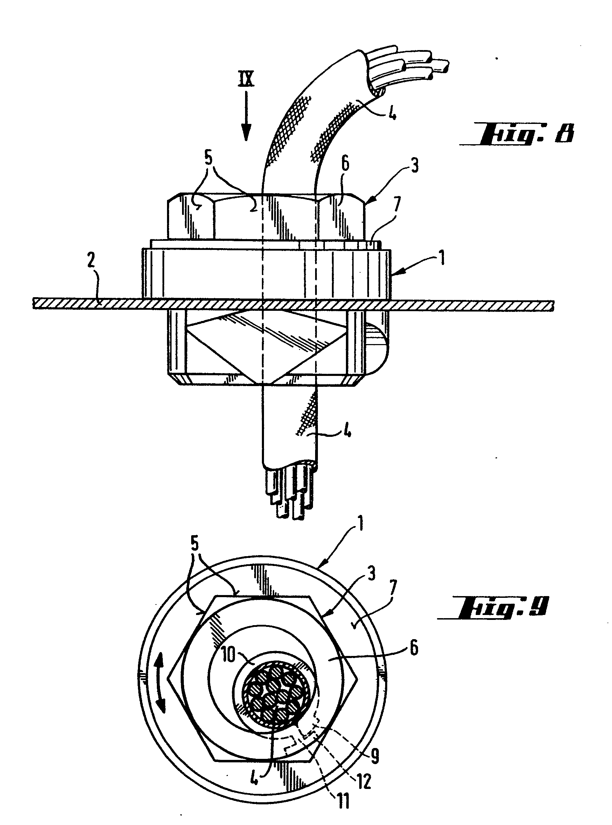

Um das Klemmglied 3 in der jeweiligen Drehstellung gegenüber der Hülse 1 festzuhalten, ist auf der Stirnfläche der Hülse 1 ein Arretierungszahnkranz 17 vorgesehen, in den drei gegeneinander winkelversetzte Rastzähne 18 eingreifen, die am Rand der Unterseite des Bundes 7 — und damit in ausreichender Weise federnd — vorgesehen sind. Dadurch kann das Klemmglied 3 zurückgedreht und damit die Klemmung gelöst werden. Damit hierbei das Klemmglied 3 nicht versehentlich zu weit oder gar vollständig herausgezogen wird, sind am Außenumfang des Halses 8 in gleichmäßigem Winkelabstand mehrere Vorsprünge 19 vorgesehen, welche zwar beim axialen Zusammenstecken durch eine Einschubnut 15 bzw. einen Ausbruch 16 hindurch eingesteckt werden können, dann aber beim Verdrehen hinter eine an der Innenseite der Hülse 1 vorgesehene Schulter 20 greifen (vgl. Fig. 4 und 6).

Durch zusammenwirkende Anschläge 21 an der Unterseite des Bundes 7 einerseits und Anschläge 22 an der Hülse 1 andererseits (jeweils nach innen versetzt gegenüber den Rastzähnen 18 bzw. dem Zahnkranz 17) wird die Verdrehung des Klemmgliedes 3 gegenüber der Hülse 1 auf das zulässige Maß begrenzt.

Wie ohne weiteres ersichtlich, kann das Klemmband 10 einen kleineren oder auch größeren Winkel umfassen bzw. länger oder kürzer sein als in Fig. 3 gezeigt.

Bei der gezeigten Ausführungsform kann das Klemmglied um etwa 180° verdreht werden, wobei dann beide Enden des Klemmbandes 10 zusammenstoßen, also der Befestigungssteg 9 gegen den Steg 12 des Einschubprofils 11 anschlägt. Hierbei wird das im Durchmesser kleinste, noch spannbare Kabel über fast den ganzen Umfang von dem Klemmband 10 umfaßt. Bei größeren Kabeldurchmessern erfolgt die Klemmung jeweils zwischen dem Klemmband 10 und der gegenüberliegenden — allerdings axial versetzten — inneren Oberfläche des Halses 8. Der größte noch spannbare Kabeldurchmesser ist derjenige, der sich gerade noch durch den Hals 8 hindurchstecken läßt.

Bei einer weiter entwickelten — allerdings etwas teureren Ausführungsform — sind zwei einander diametral gegenüberliegende Klemmbänder vorgesehen, wobei in Drehrichtung gesehen das eine an das andere anschließt. Diese Ausführung hat den Vorteil, daß das Kabel zentral eingespannt wird (und nicht gegen die eine Halswandung geschoben wird) und daß die beiderseitigen Spannflächen nicht axial gegeneinander versetzt sind. Dabei beträgt die erforderliche Verdrehung des Klemmgliedes nur einige Grad beim größten, bis zu höchstens 90° beim kleinsten klemmbaren Kabeldurchmesser. Damit die beiden Klemmbänder einander beim Verdrehen des Klemmgliedes nicht überschneiden, also nicht ein Klemmband in den Weg des anderen Klemmbandes gelangt, können die beiden Klemmbänder wendelförmig, also nach jeweils einer Schraubenlinie — bzw. einem kleinen Teil einer Schraubenlinie — ausgebildet sein. Eine andere, besonders günstige Lösung dieses Teilproblems ist in Fig. 10 bis 15 gezeigt. Hierbei sind das Klemmglied und die Durchführungshülse im wesentlichen wie bei dem Beispiel nach Fig. 1 bis 9 ausgebildet ; gleiche bzw. analoge Teile sind in Fig. 10 bis 15 daher mit gleichen Bezugzeichen versehen wie in Fig. 1 bis 9. Hinzu treten folgende Besonderheiten :

Statt nur eines einzigen Klemmbandes sind zwei Klemmbänder 23, 24 vorgesehen, die sich jeweils etwa über den halben Umfang erstrecken, wobei das eine Klemmband 23 in Umfangsrichtung an das andere Klemmband 24 anschließt. Jedes der beiden Klemmbänder 23, 24 besteht aus zwei Hälften oder Teilen 23a, 23b bzw. 24a, 24b, die jeweils um die Breite (zuzüglich Spiel 13a) gegeneinander in Achsrichtung (Durchsteckrichtung) versetzt sind, wobei die beiden Teile jeweils mittels einer Brücke oder eines Steges 23c, 24c miteinander fest verbunden sind.

Durch je einen axialen Steg 9 sind die Klemmbänder 23, 24 mit dem Hals 8 des Klemmgliedes verbunden. An dem freien Ende der Klemmbänder 23, 24, genauer gesagt am freien Ende des axial versetzten Teiles 23b bzw. 24b ist wiederum jeweils ein Einschubprofil 11 mit beidseitlichen Flügeln 12 vorgesehen. Beim axialen Zusammenstecken von Klemmglied und Hülse wird jedes der beiden Einschubprofile in jeweils eine entsprechende Einschubnut 15 der Hülse eingeschoben — und in dieser also unverdrehbar festgehalten. Wenn nun der Kopf 6 des Klemmglieds gegenüber der Hülse 1 verdreht wird, so gelangen beide Klemmbänder (wie zuvor nur das eine Klemmband 10) aus der vollen Umfangslage (Fig. 12) heraus und übergreifen den lichten Querschnitt der Hülse — so lange bis die beiden Klemmbänder 23, 24 bzw. die vier Klemmbandhälften 23a, 23b ; 24a, 24b (jeweils in ihrem mittleren Bereich) das eingesteckte Kabel 4 zwischen sich festklemmen (vgl. Fig. 15). Das Kabel 4 wird also gleichmäßig über fast seinen ganzen Umfang erfaßt, wobei es in koaxialer Lage festgeklemmt wird.

Die beschriebenen Kabeldurchführungen vereinigen eine großflächige, umschlingende Klemmung, praktisch stufenlosen Klemmbereich von mehr als 60 % der Durchlaßöffnung, Klemm- und Öffnungsrichtung wie bei einer Schraube und damit einfache Handhabung und einfache Herstellung.

**Ansprüche**

1. Kabeldurchführung mit Zugentlastung, bestehend aus einer in einen Wanddurchbruch einsetzbaren Durchführungshülse (1) und einem in diese einsetzbaren, das Kabel (4) umfassenden, im wesentlichen rohrstückförmigen Klemmglied (3), das einen äußeren, mit Schlüsselangriffsflächen (5) versehenen, gegenüber der Hülse (1) verdrehbaren und in der jeweiligen Drehstellung arretierbaren Kopf (6) und wenigstens ein mit dem Kopf (6) fest verbundenes, in die Hülse (1) eingreifendes, gegen den Umfang des Kabels (4) wirkendes Klemmorgan aufweist, dadurch gekennzeichnet, daß das bzw. jedes Klemmorgan aus einem sich quer zur Längsachse erstreckenden, in axialer Draufsicht etwa halbkreisförmig verlaufenden, mit seinem einen Ende starr mit dem Kopf (6) verbundenen Klemmband (10 ; 23, 24) besteht, welches an seinem freien Ende ein in eine axiale Führungsnut (15) der Hülse (1) einschiebbares Befestigungsprofil (11) aufweist.

2. Kabeldurchführung nach Anspruch 1, dadurch gekennzeichnet, daß das Klemmorgan aus zwei einander diametral gegenüberliegenden Klemmbändern (23, 24) besteht.

3. Kabeldurchführung nach Anspruch 2, dadurch gekennzeichnet, daß jedes der beiden Klemmbänder (23, 24) aus zwei in Achsrichtung (Durchsteckrichtung) gegeneinander versetzten, durch einen Steg (23c, 24c) miteinander verbundenen Teilen (23a, 23b ; 24a, 24b) besteht und daß der versetzte Teil (23b, 24b) jeder der beiden Klemmbänder in gleicher Höhe wie der nicht versetzte Teil (23a, 24a) der jeweils anderen Klemmbänder liegt.

4. Kabeldurchführung nach einem der Ansprüche 1 bis 3, dadurch gekennzeichnet, daß die Innenwand der Hülse (1) nahe ihrem äußeren Ende eine Ringschulter (20) aufweist, die von mindestens einer Einschuböffnung (16) für mindestens einen am Hals (8) des Klemmglieds (3) vorgesehenen nach außen gerichteten Vorsprung (19) unterbrochen ist, der die Ringschulter (20) normalerweise hintergreift.

5. Kabeldurchführung nach einem der Ansprüche 1 bis 4, dadurch gekennzeichnet, daß die Hülse (1) an ihrem der Außenseite zugewandten Ende einen Kranz von Rastzähnen (17) und der Kopf (6) des Klemmgliedes wenigstens ein mit den Rastzähnen zusammenarbeitendes Arretierungsorgan (18) aufweist.

6. Kabeldurchführung nach Anspruch 5, dadurch gekennzeichnet, daß die Rastzähne (17) auf der Stirnfläche der Hülse (1) ausgebildet sind und die Arretierungsorgane (18) federnd an einem an dieser Stirnfläche anliegenden Bund (7) des Klemmglieds (3) vorgesehen sind.

7. Kabeldurchführung nach Anspruch 6, dadurch gekennzeichnet, daß auf der Innenseite der Hülse (1) wenigstens ein Anschlagsteg (22) vorgesehen ist, der zur Begrenzung der Drehung mit einem an dem Bund (7) des Klemmgliedes vorgesehenen Anschlag (21) zusammenarbeitet.

**Claims**

1. A strain-relieving cable feedthrough consisting of a feedthrough sleeve (1), which is adapted to be inserted in a wall aperture, and a substantially tubular clamping member (3), which is adapted to be inserted into said sleeve and embraces the cable (4) and comprises an outer head (6), which has surfaces (5) for engagement by a wrench and is adapted to be rotated relative to the sleeve (1) and to be fixed in its angular position, and at least one clamping element (3), which is firmly connected to the head (6) and extends into the sleeve and acts against the periphery of the cable (4), characterized in that the or each clamping element comprises a clamping band (10 ; 32, 24) which extends transversely to the longitudinal axis and approximately along a semicircle in an axial top plan view and atone end is rigidly connected to the head (6) and at its free end has a profiled mounting portion (11), which is adapted to be slidably inserted into an axial guiding groove (15) of the sleeve (1).

2. A cable feedthrough according to claim 1, characterized in that the clamping element consists of two clamping bands (23, 24), which are diametrically opposite to each other.

3. A cable feedthrough according to claim 2, characterized in that each of the two clamping bands (23, 24) consists of two parts (23a, 23b ; 24a, 24b), which are offset from each other in the axial direction (feedthrough direction) and are interconnected by a web (23c, 24c) and the offset part (23b, 24b) of each of the two clamping bands is disposed on the same level as the non-offset part (23a, 24a) of the other clamping band.

4. A cable feedthrough according to any of claims 1 to 3, characterized in that the sleeve (1) is provided near its outer end on its inside surface with an annular shoulder (20), which is interrupted by at least one opening (16) for slidably receiving at least one outwardly directed projection (19), which is provided on the neck (8) of the clamping member (3) and normally engages the annular shoulder from behind.

5. A cable feedthrough according to any of claims 1 to 4, characterized in that the sleeve (1) is provided at its end which faces the outside with an annular series of detent teeth (17) and the head (6) of the clamping member comprises at least one locking member (18) which cooperates with the detent teeth.

6. A cable feedthrough according to claim 5, characterized in that the detent teeth (17) are formed on the end face of the sleeve (1) and the locking members (18) are resiliently provided on a collar (7) of the clamping member (3), which collar engages said end face.

7. A cable feedthrough according to claim 6, characterized in that at least one stop web (22) is provided on the inside surface of the sleeve (1) and cooperates with a stop (21) provided on the collar (7) of the clamping element so as to limit the rotation.

**Revendications**

1. Traversée de câble à soulagement de traction, constituée par une douille de traversée (1) pouvant être enfoncée dans un passage pratiqué dans une paroi et par un élément de serrage (3) pouvant être inséré dans cette dernière, entourant le câble (4) et sensiblement en forme de pièce tubulaire, lequel comporte une tête extérieure (6) pourvue de surfaces (5) destinées à coopérer avec une clé, pouvant être tournée par rapport à la douille (1) et être bloquée dans la position de rotation atteinte, et au moins un organe de serrage solidaire de la tête (6), pénétrant dans la douille (1) et agissant contre la périphérie du câble (4), caractérisée en ce que l'organe de serrage est constitué par une bande de serrage (10 ; 23, 24) s'étendant transversalement à l'axe longitudinal, ayant en vue en plan axial sensiblement la forme d'un demi-cercle, reliée rigidement à la tête (6) par l'une de ses extrémités, et présentant à son extrémité libre une partie profilée de fixation (11) pouvant être enfoncée dans une rainure de guidage axiale (15) de la douille (1).

2. Traversée de câble selon la revendication 1, caractérisée en ce que l'organe de serrage est constitué par deux bandes de serrage (23, 24) disposées diamétralement à l'opposé l'une de l'autre.

3. Traversée de câble selon la revendication 2, caractérisée en ce que chacune des deux bandes de serrage (23, 24) est constituée en deux parties (23a, 23b ; 24a, 24b) décalées l'une par rapport à l'autre en direction axiale (direction de l'enfoncement) et reliées l'une à l'autre par une branche (23c, 24c), et en ce que la partie décalée (23b, 24b) de chacune des deux bandes de serrage est disposée à la même hauteur que la partie non décalée (23a, 24a) de l'autre bande de serrage respective.

4. Traversée de câble selon l'une quelconque des revendications 1 à 3, caractérisée en ce que la paroi interne de la douille (1) comprend à proximité de son extrémité extérieure un épaulement annulaire (20), qui est interrompu par au moins une ouverture d'introduction (16) pour au moins une saillie (19) prévue sur le collet (8) de l'élément de serrage (3) et dirigée vers l'extérieur, qui coopère normalement par l'arrière avec l'épaulement annulaire (20).

5. Traversée de câble selon l'une quelconque des revendications 1 à 4, caractérisée en ce que la douille (1) comprend sur son extrémité tournée vers le côté extérieur une couronne de dents d'arrêt (17) et la tête (6) de l'élément de serrage au moins un organe d'arrêt (18) coopérant avec les dents d'arrêt.

6. Traversée de câble selon la revendication 5, caractérisée en ce que les dents d'arrêt (17) sont formées sur la surface frontale de la douille (1) et les organes d'arrêt (18) sont réalisés de façon élastique sur une collerette (7) de l'élément de serrage (3) qui s'applique centre cette surface frontale.

7. Traversée de câble selon la revendication 6, caractérisée en ce qu'au moins une branche de butée (22) est prévue sur le côté interne de la douille (1), branche qui coopère avec une butée (21) prévue sur la collerette (7) de l'organe de serrage pour limiter la rotation.

*Fig. 1*

*Fig. 2*

*Fig. 3*

*Fig. 4*

1

Fig. 5

Fig. 6

Fig. 7

**Fig. 8**

**Fig. 9**

Fig. 10

Fig. 11

Fig. 12

*Fig. 13*

*Fig. 14*

*Fig. 15*